(19) Europäisches Patentamt
European Patent Office
Office européen des brevets

(11) Numéro de publication : **0 021 954**
**B1**

(12) **FASCICULE DE BREVET EUROPÉEN**

(45) Date de publication du fascicule du brevet : **05.06.85**

(51) Int. Cl.⁴ : **B 01 D 53/36**, B 01 D 53/34, C 01 B 21/20, C 01 B 21/40

(21) Numéro de dépôt : **80400848.0**

(22) Date de dépôt : **11.06.80**

(54) **Procédé et installation d'élimination continue d'oxydes d'azote des gaz nitreux.**

(30) Priorité : **13.06.79 FR 7915147**

(43) Date de publication de la demande : **07.01.81 Bulletin 81/01**

(45) Mention de la délivrance du brevet : **05.06.85 Bulletin 85/23**

(84) Etats contractants désignés : **AT BE CH DE GB IT LI LU NL SE**

(56) Documents cités :
**FR-A- 2 211 278**
**US-A- 1 433 969**
**US-A- 2 856 259**
**US-A- 3 960 507**
**CHEMICAL ABSTRACTS, vol. 81, no. 24, 16 décembre 1974, réf. 158222F, page 332 Columbus, Ohio, US**

(73) Titulaire : **Société dite: Compagnie Française de l'Azote COFAZ**
**4, Avenue Vélasquez**
**F-75008 Paris (FR)**

(72) Inventeur : **Mouille, Bernard**
**5 avenue Jules Ferry**
**F-65260 Pierrefitte-Nestalas (FR)**
Inventeur : **Durand, Michel**
**Avenue Mg Flauss**
**F-65400 Argelès-Gazost (FR)**

(74) Mandataire : **Petit, Alain et al**
**OFFICE JOSSE & PETIT 126 Boulevard Haussmann**
**F-75008 Paris (FR)**

**EP 0 021 954 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

L'invention concerne un procédé de récupération continue des oxydes d'azote permettant notamment d'éliminer partiellement et de décolorer les effluents atmosphériques gazeux connus couramment sous le nom de gaz nitreux ; elle vise également l'installation pour la mise en œuvre du procédé.

Les gaz de queue des ateliers de fabrication d'acide nitrique renferment des oxydes d'azote : l'oxyde nitrique NO (incolore) et le peroxyde d'azote $NO_2$ (de couleur brun-roux) ; de plus, au contact de l'air atmosphérique, l'oxyde nitrique NO s'oxyde lentement en peroxyde d'azote $NO_2$. On désigne couramment les oxydes d'azote NO et $NO_2$ sous la seule forme NOx.

Ces oxydes ne sont pas seulement émis par les ateliers de fabrication d'acide nitrique mais ils sont également émis par les ateliers de fabrication de nitrate de chaux ou de composés organiques nitrés, les centrales thermiques, les chaudières industrielles, les ateliers de décapage et par les moteurs des automobiles.

De nombreux procédés ont été proposés pour l'élimination des oxydes d'azotes :

— lavage des effluents gazeux par des solutions alcalines, notamment de sulfites.

— réaction catalytique avec l'ammoniac ou d'autres réducteurs tels que l'hydrogène ou le méthane,

— absorption classique des oxydes d'azote par des adsorbants tels que les tamis moléculaires et les charbons actifs ; les adsorbants sont ensuite régénérés par désorption thermique avec un balayage gazeux puis un refroidissement, afin de repartir avec un adsorbant actif. Ce traitement thermique entraîne avec dégradation assez rapide de l'adsorbant. De plus, un tel système d'épuration nécessite plusieurs capacités d'adsorbant, ainsi qu'un équipement de chauffage et le vannage en conséquence pour assurer l'alternance adsorption-régénération ; tout ceci représente un investissement important et des frais de fonctionnement élevés, sans compter les dépenses afférentes au remplacement fréquent de l'adsorbant.

— oxydation catalytique des oxydes d'azote en présence d'un catalyseur du type charbon actif suivie d'une absorption du peroxyde d'azote par un milieu aqueux dans une tour à garnissage selon le brevet US 1 433 969.

La demanderesse a trouvé, et ceci représente l'invention, qu'on obtenait une élimination continue satisfaisante des oxydes d'azote, de façon économique, selon le procédé en une seule étape qui consiste à faire passer simultanément un mélange gazeux contenant les oxydes d'azote et de l'oxygène et un liquide d'arrosage pouvant être de l'eau pure ou une solution nitrique sur le lit de charbon actif à une température comprise entre environ 2 et 80 °C.

Il a été constaté que dans ces conditions l'on obtenait une élimination notable des oxydes d'azote de l'effluent gazeux, sans aucune dégradation du charbon actif et sans besoin de fluide ou d'équipement supplémentaire.

Le mécanisme de l'élimination des oxydes d'azote peut s'expliquer ainsi :

— au contact du charbon actif, l'oxyde nitrique NO s'absorbe et réagit avec l'oxygène $O_2$ en général présent (dans le cas des ateliers de fabrication d'acide nitrique, la teneur en oxygène représente couramment 1 à 6 % en volume) ; il y a formation de peroxyde d'azote $NO_2$ selon la formule :

$$NO + 1/2\,O_2 \rightarrow NO_2$$

— la totalité du peroxyde d'azote adsorbé ($NO_2$ initial et $NO_2$ formé) réagit avec l'eau pour donner de l'acide nitrique et de l'oxyde nitrique selon la réaction :

$$3\,NO_2 + H_2O \rightarrow 2\,HNO_3 + NO$$

— l'acide nitrique est entraîné par l'eau et récupéré dans l'atelier ; l'oxyde nitrique très faiblement soluble dans l'eau (ou l'acide faible) est évacué dans l'effluent gazeux.

En cas d'absence totale d'oxygène, l'oxyde nitrique NO n'est pas transformé et seul le peroxyde d'azote $NO_2$ initialement présent est susceptible d'être éliminé ; mais on peut apporter de l'oxygène par exemple sous forme d'air, ce qui serait nécessaire s'il n'y avait que l'oxyde nitrique NO à éliminer.

Ce procédé permet donc une élimination de plus de la moitié des oxydes d'azote, avec les caractéristiques suivantes :

— élimination quasi totale du peroxyde d'azote $NO_2$, d'où suppression de la coloration des effluents ; il peut rester des traces de peroxyde d'azote, de l'ordre de 50 vpm (volumes par million de volumes),

— élimination de plus de la moitié des oxydes d'azote NOx ; le fait que le lavage par l'eau redonne de l'oxyde nitrique NO ne permet pas d'assurer une élimination totale des NOx,

— récupération d'acide nitrique, ce qui peut augmenter le rendement global de l'atelier d'environ 0,5 pour cent.

Le rendement d'épuration est d'autant plus grand que la pression est élevée, que la vitesse spatiale du gaz est plus faible, que le taux d'oxydation $\tau (\tau = NO_2/NOx)$ est plus fort et que la vitesse spatiale du liquide d'arrosage est voisine de 0,3 $h^{-1}$ (on appelle vitesse spatiale le rapport du volume de fluide au volume apparent du lit adsorbant passant en un temps donné, ici une heure).

Ce procédé ne permet pas une élimination totale des oxydes d'azote, mais porte principalement sur le peroxyde d'azote $NO_2$ (qui provoque la coloration de l'effluent) dont l'élimination, elle, est presque totale.

Ce procédé présente l'avantage considérable de n'utiliser qu'une capacité, car son processus est continu et il ne nécessite aucun fluide auxiliaire car le liquide d'arrosage peut être l'eau de réaction de l'atelier nitrique. Ce procédé représente donc des investissements limités, ainsi que des dépenses réduites de fonctionnement et il augmente par ailleurs le rendement de l'atelier. Il suffit de disposer d'un liquide (eau ou acide) suffisamment propre, car les particules solides d'une eau bouseuse, par exemple, bloqueraient partiellement les pores du charbon actif et entraîneraient une baisse de rendement d'épuration. La présente invention a également pour objet une installation pour la mise en œuvre du procédé ci-dessus, comprenant une colonne comportant à sa partie supérieure, une entrée de liquide d'arrosage, ainsi qu'une entrée et une sortie des gaz à épurer respectivement ou à la fois à sa partie supérieure et à sa partie inférieure et un bac de récupération de liquide, ladite installation comprenant un seul lit de charbon actif sur lequel est pulvérisé le liquide d'arrosage, une pompe avec arrivée de liquide d'arrosage et arrivée de liquide à recycler et sortie vers la colonne, un dispositif récupérateur de liquide disposé sur la sortie vers l'air libre des gaz épurés, ainsi que des vannes sur les différents circuits permettant le recyclage du liquide et le passage du gaz et du liquide à co-courant, à contre-courant ou à courants croisés.

L'invention sera mieux comprise d'après la description suivante, qui sera donnée ici en se référant à titre d'exemple à la figure 1 qui représente un mode préféré de réalisation d'une installation conforme à l'invention.

Le gaz à épurer est introduit en 1 et par la vanne 2 ouverte arrive en haut de la colonne 3 et circule à travers le lit de charbon actif 4. L'eau (ou l'acide faible) est introduite en 5, puis par la vanne 6 ouverte, la nourrice 7, la vanne 8 et la pompe 9, est envoyée par la conduite 10 en haut de la colonne 3 où elle est pulvérisée par la tuyère 11 sur le lit de charbon actif 4. Le gaz épuré est évacué par la conduite 12 et la vanne 13 dans le dévésiculeur 14. Les gouttelettes de liquide récupéré sont évacuées à travers la vanne 15 et le gaz s'échappe à l'air en 17 après passage par la vanne 16.

Le liquide d'arrosage acide est évacué en bas de la colonne 3 par la vanne 18 et est récupéré à travers la vanne 19 dans le bac 20, d'où on peut l'évacuer par la vanne 21.

Pendant ce fonctionnement, les vannes 22, 23, 24, 25, 26 et 27 sont fermées, car l'installation fonctionne alors à co-courant gaz-liquide descendant et en circuit ouvert sur le liquide d'arrosage.

Le liquide d'arrosage peut être recyclé au moins partiellement. Avec un recyclage du liquide d'arrosage, les vannes 19, 21 et 26 sont fermées, tandis que les vannes 24, 25 et 27 sont ouvertes.

L'installation peut aussi fonctionner à contre-courant gaz-liquide, auquel cas les vannes 2 et 13 sont fermées, alors que les vannes 22 et 23 sont ouvertes ; là encore, il y a possibilité de travailler soit en circuit ouvert, soit en recyclage sur le liquide d'arrosage, comme explicité précédemment.

Il est également possible d'enrichir le liquide d'arrosage en fermant les vannes 8 et 19 et en ouvrant les vannes 24 et 27 ; le liquide d'arrosage est recyclé par la pompe 9 et la conduite 10, ce qui permet de l'enrichir en acide nitrique (par exemple dans le cas où l'on désire surtitrer une solution diluée d'acide nitrique). Lorsque ce liquide est suffisamment enrichi en acide nitrique, il est possible de repasser en circuit ouvert ; il est aussi possible par un réglage convenable des vannes de recycler une partie du liquide de lavage enrichi en acide nitrique et d'introduire de l'eau en quantité correspondant à la solution nitrique évacuée.

On peut aussi utiliser une installation dite à courants croisés, où le liquide passe du haut en bas où le courant gazeux s'écoule horizontalement.

Les exemples ci-après donnent les résultats obtenus sur des installations de ce type, fonctionnant avec un charbon actif « ACTICARBONE AC 35 » de la société CECA SA.

Ce charbon actif se présente en bâtonnets cylindriques de dimensions moyennes suivantes :

— diamètre moyen : 3,2 mm
— longueur moyenne : 3,9 mm

L'installation pilote des essais 1 à 6 comporte une colonne de 1 mètre de haut et 10 centimètres de diamètre contenant 3,3 dm³, soit 1,5 kg de charbon actif. Celle des essais 8 et 9 est une colonne de 19,5 cm de diamètre contenant 21,8 dm³ soit 9,6 kg de charbon actif.

Les contrôles analytiques sont effectués au moyen d'un analyseur NOx à chimiluminescence donnant les teneurs en NOx, NO et $NO_2$.

Exemple 1

Les conditions opératoires sont les suivantes :

Passage à co-courant : le gaz nitreux et l'eau d'arrosage passent de haut en bas
Pression : 2,4 bars absolus
Température : 16 °C

Débit gazeux : 4,910 $Nm^3$ par heure
Débit d'eau : 0,7 litre par heure
Vitesse spatiale du gaz :
réelle : 670 $h^{-1}$
ramenée aux conditions normales de température et de pression : 1 500 $h^{-1}$ T.P.N.
Vitesse linéaire du gaz : 0,08 mètre par seconde
Vitesse spatiale de l'eau : 0,21 $h^{-1}$

Après 11 jours de fonctionnement continu, on observe les résultats suivants, exprimés en volumes d'oxydes d'azote par million de volumes de gaz total (vpm) :

| | Entrée | Sortie |
|---|---|---|
| NOx | 1 760 | 1 010 |
| dont NO | 950 | 925 |
| dont $NO_2$ | 810 | 85 |
| $\tau$ = $NO_2$/NOx | 0,460 | 0,084 |

Rendements d'épuration :

en $NO_2$ : 89,5 %
en NOx : 42,6 %

Exemple 2

Les conditions opératoires sont les suivantes :

Passage à co-courant descendant
Pression : 2,4 bars absolus
Température : 12 °C
Débit gazeux : 3,900 $Nm^3$ par heure
Débit d'eau : 1,2 litre par heure
Vitesse spatiale du gaz :
réelle : 520 $h^{-1}$
ramenée aux conditions normales de température et de pression : 1 180 $h^{-1}$ T.P.N.
Vitesse linéaire du gaz : 0,06 mètre par seconde
Vitesse spatiale de l'eau : 0,36 $h^{-1}$

Après 37 jours de fonctionnement continu, on observe les résultats suivants, exprimés en volumes d'oxydes d'azote par million de volumes de gaz total (vpm) :

| | Entrée | Sortie |
|---|---|---|
| NOx | 1 220 | 550 |
| dont NO | 660 | 500 |
| dont $NO_2$ | 560 | 50 |
| $\tau$ = $NO_2$/NOx | 0,459 | 0,091 |

Rendements d'épuration :

en $NO_2$ : 91,1 %
en NOx : 54,9 %

Exemple 3

Passage à contre-courant (gaz ascendant, liquide descendant)
Pression : 2,5 bars absolus
Température : 15 °C
Débit gazeux : 3,880 $Nm^3$ par heure
Débit d'eau : 1,2 litre par heure
Vitesse spatiale du gaz :
réelle : 505 $h^{-1}$
ramenée aux conditions normales de température et de pression : 1 175 $h^{-1}$ T.P.N.

Vitesse linéaire du gaz : 0,06 mètre par seconde
Vitesse spatiale de l'eau : 0,36 $h^{-1}$

On observe les résultats suivants, toujours exprimés en volumes d'oxydes d'azote par million de volumes de gaz total (vpm) :

| | Entrée | Sortie |
|---|---|---|
| NOx | 1 410 | 705 |
| dont NO | 620 | 550 |
| dont $NO_2$ | 790 | 155 |
| $\tau = NO_2/NOx$ | 0,560 | 0,220 |

Rendements d'épuration :

en $NO_2$ : 80,4 %
en NOx : 50,0 %

Le système à contre-courant est moins performant que le processus à co-courant, il crée de plus une perte de charge supérieure (toutes choses égales par ailleurs).

Exemple 4

Cet exemple montre l'importance du taux d'oxydation initial du gaz nitreux sur l'efficacité de l'épuration en peroxyde d'azote $NO_2$. Les conditions opératoires sont les suivantes :

Passage à co-courant descendant
Pression : 2,3 bars absolus
Température : 12 °C
Débit gazeux : 3,650 $Nm^3$ par heure
Débit d'eau : 2,8 litres par heure
Vitesse spatiale du gaz :
réelle : 510 $h^{-1}$
ramenée aux conditions normales de température et de pression : 1 100 $h^{-1}$ T.P.N.
Vitesse linéaire du gaz : 0,06 mètre par seconde
Vitesse spatiale de l'eau : 0,85 $h^{-1}$

Après 30 jours de fonctionnement continu, on observe les résultats suivants, exprimés en volumes d'oxydes d'azote par million de volumes de gaz (vpm) :

| | Entrée | Sortie |
|---|---|---|
| NOx | 1 600 | 745 |
| dont NO | 560 | 695 |
| dont $NO_2$ | 1 040 | 50 |
| $\tau = NO_2/NOx$ | 0,650 | 0,067 |

Rendements d'épuration :
en $NO_2$ : 95,2 %
en NOx : 53,4 %

Ces bons rendements sont uniquement dus à la forte valeur du taux d'oxydation initial du gaz nitreux car lors de cet essai l'arrosage était trop important ; cela a entravé la phase d'oxydation du NO et limité le rendement global d'épuration en NOx, comme le montrent les deux exemples ci-après où nous avons fait varier le débit d'arrosage du charbon actif.

Exemples 5a et 5b

Les deux exemples ci-dessous illustrent l'importance de la vitesse spatiale du liquide d'arrosage sur les rendements d'épuration. Les deux essais sont effectués dans les conditions opératoires identiques suivantes :

Passage à co-courant descendant

Pression : 2,4 bars absolus
Température : 15 °C
Vitesse spatiale du gaz :
réelle : 450 $h^{-1}$
ramenée aux conditions normales de température et de pression : 1 015 $h^{-1}$ T.P.N.
Vitesse linéaire du gaz : 0,055 m/sec
Taux d'oxydation $\tau = NO_2/NOx = 0{,}523$

a) Avec un débit d'arrosage de 2,8 litres par heure, soit une vitesse spatiale du liquide de 0,85 $h^{-1}$, les rendements sont :

en $NO_2$ : 93,0 %
en NOx : 51,4 %

b) Avec un débit d'arrosage de 1,2 litre par heure, c'est-à-dire une vitesse spatiale d'eau de 0,36 $h^{-1}$, les rendements sont :

en $NO_2$ : 93,6 %
en NOx : 56,9 %

Les rendements, notamment en NOx, sont meilleurs avec cette vitesse spatiale d'eau plus faible.

D'autres essais ont permis de confirmer la fourchette optimale d'arrosage : elle correspond à une vitesse spatiale du liquide variant de 0,3 à 0,4 $h^{-1}$, mais les rendements sont tout de même corrects si ce paramètre vaut 0,2 $h^{-1}$ ou 0,9 $h^{-1}$.

## Exemple 6

Cet exemple montre l'influence de la vitesse spatiale du gaz, donc du temps de contact entre le gaz nitreux et le charbon actif, sur l'efficacité de l'épuration.

Les conditions opératoires sont les suivantes :

Passage à co-courant descendant
Pression : 2,5 bars absolus
Température : 12 °C
Débit gazeux : 2,180 $Nm^3$ par heure
Débit d'eau : 1,2 litre par heure
Vitesse spatiale du gaz :
réelle : 280 $h^{-1}$
ramenée aux conditions normales de température et de pression : 660 $h^{-1}$ T.P.N.

Après 14 jours de fonctionnement continu, on observe les résultats suivants, exprimés en volumes d'oxydes d'azote par million de volumes de gaz (vpm) :

| | Entrée | Sortie |
|---|---|---|
| NOx | 1 820 | 750 |
| dont NO | 890 | 700 |
| dont $NO_2$ | 930 | 50 |
| $\tau = NO_2/NOx$ | 0,511 | 0,067 |

Rendements d'épuration :

en $NO_2$ : 94,6 %
en NOx : 58,8 %

Les résultats des divers essais précédents peuvent se résumer dans le tableau ci-après :

(Voir Tableau page 7)

| Exemple N° | vpm NOx entrée | Taux (%) d'oxydation $\tau = NO_2/NOx$ | Vitesse spatiale du gaz réelle ($h^{-1}$) | Vitesse spatiale du gaz T.P.N. ($h^{-1}$ T.P.N.) | Vitesse spatiale du liquide $h^{-1}$ | Rendement (%) d'épuration en $NO_2$ | Rendement (%) d'épuration en NOx |
|---|---|---|---|---|---|---|---|
| 1 | 1 760 | 46,0 | 670 | 1 500 | 0,21 | 89,5 | 42,6 |
| 2 | 1 220 | 45,9 | 520 | 1 180 | 0,36 | 91,1 | 54,9 |
| 3 | 1 410 | 56 | 505 | 1 175 | 0,36 | 80,4 | 50,0 |
| 4 | 1 600 | 65,0 | 510 | 1 100 | 0,85 | 95,2 | 53,4 |
| 5a | 1 215 | 52,3 | 450 | 1 015 | 0,85 | 93,0 | 51,4 |
| 5b | 1 215 | 52,3 | 450 | 1 015 | 0,36 | 93,6 | 56,9 |
| 6 | 1 820 | 51,1 | 280 | 660 | 0,36 | 94,6 | 58,8 |

On constate que les rendements d'épuration sont améliorés par la diminution de la vitesse spatiale du gaz et par un débit optimum de liquide d'arrosage correspondant à une vitesse spatiale du liquide voisine de 0,35 $h^{-1}$.

Exemple 7

Le procédé a fait l'objet d'application industrielle mise en œuvre sur un atelier de fabrication d'acide nitrique pendant plus de 10 semaines.

On traite 9 700 $Nm^3$ par heure de gaz nitreux contenant environ 1 500 vpm de NOx, à 2,7 bars absolus, par 8,6 $m^3$ de charbon actif « ACTICARBONE AC 35 » qui est arrosé par 4 à 5 $m^3$ par heure d'eau acidulée. Le gaz nitreux et l'eau acidifiée traversent le charbon actif à co-courant descendant.

Pour une marche nominale de l'atelier (correspondant à un produit fini titrant 54 % massique d'acide nitrique), il sort de 45 à 50 volumes par million de volumes de gaz de peroxyde d'azote $NO_2$ accompagné de 700 vpm d'oxyde nitrique NO. Les effluents gazeux atmosphériques sont parfaitement incolores et il n'y a pas d'oxydation appréciable du NO rejeté dans les environs de l'usine.

On réussit à fabriquer un produit fini titrant 63 % massique d'acide nitrique tout en ayant des effluents gazeux atmosphériques incolores, chose qui n'aurait pas été possible sans ce procédé d'épuration sur charbon actif humidifié.

Exemple 8

Essai pilote réalisé à haute pression sur un appareillage contenant 21,8 $dm^3$ d'« ACTICARBONE AC 35 », soit 9,6 kg d'adsorbant.

Les conditions opératoires sont les suivantes :

Passage à co-courant descendant
Pression : 10,1 bars absolus
Température : 9 °C
Débit gazeux : 47,805 $Nm^3$ par heure
Débit d'eau : 6,5 litres par heure
Vitesse spatiale du gaz :
  réelle : 227 $h^{-1}$
  ramenée aux conditions normales de température et de pression : 2 195 $h^{-1}$ T.P.N.
Vitesse linéaire du gaz : 0,046 mètre par seconde
Vitesse spatiale de l'eau : 0,3 $h^{-1}$

On observe les résultats suivants, exprimés en volumes d'oxydes d'azote par million de volumes de gaz (vpm) :

| | Entrée | Sortie |
|---|---|---|
| NOx | 850 | 345 |
| dont NO | 280 | 285 |
| dont $NO_2$ | 570 | 60 |
| $\tau = NO_2/NOx$ | 0,671 | 0,171 |

Rendements d'épuration :

en $NO_2$ : 89,5 %
en NOx : 59,4 %

L'essai, fait avec des vitesses spatiales de gaz plus faible, de l'ordre de 110 $h^{-1}$ réelle (1 025 $h^{-1}$ T.P.N.), a permis d'obtenir des rendements d'épuration en NOx de 70 % avec à la sortie du charbon actif une teneur en $NO_2$ de seulement 45 vpm. De telles vitesses spatiales réelles sont tout de même assez faibles et impliquent des volumes d'adsorbants assez grands.

## Exemple 9

Essai pilote réalisé comme précédemment dans l'appareillage haute pression.
Les conditions opératoires sont les suivantes :

Passage à co-courant descendant
Pression : 8,0 bars absolus
Température : 8 °C
Débit gazeux : 42,820 $Nm^3$ par heure
Débit d'eau : 6,0 litres par heure
Vitesse spatiale du gaz :
réelle : 256 $h^{-1}$
ramenée aux conditions normales de température et de pression : 1 965 $h^{-1}$ T.P.N.
Vitesse linéaire du gaz : 0,052 mètre par seconde
Vitesse spatiale de l'eau : 0,275 $h^{-1}$

On observe les résultats suivants exprimés en volumes d'oxydes d'azote par million de volumes de gaz (vpm) :

| | Entrée | Sortie |
|---|---|---|
| NOx | 1 040 | 545 |
| dont NO | 430 | 487 |
| dont $NO_2$ | 610 | 58 |
| $\tau = NO_2/NOx$ | 0,587 | 0,106 |

Rendements d'épuration :

en $NO_2$ : 90,5 %
en NOx : 47,6 %

Ces divers essais, tant à co-courant qu'à contre-courant ou à courants croisés, ont donné les meilleurs résultats, en opérant dans les conditions suivantes qui ne limitent toutefois pas l'invention :
Pression absolue comprise entre 0,9 et 12 bars.
Température comprise entre 2 et 80 °C
Vitesse spatiale du liquide comprise entre 0,05 et 2 $h^{-1}$
Vitesse spatiale réelle du gaz comprise entre 100 et 3 500 $h^{-1}$

La teneur en oxydes d'azote du gaz à traiter est comprise entre environ 500 et 5 000 volumes d'oxydes d'azote NOx par million de volumes de gaz à traiter.

Dans tous les cas, l'effluent contient encore de l'oxyde nitrique NO, qu'on peut oxyder dans une capacité située après le lit de charbon actif ce qui donne un gaz contenant moins d'oxyde nitrique NO et par contre enrichi en peroxyde d'azote $NO_2$ ; le gaz contenant ce mélange peut être de nouveau traité sur un second lit de charbon actif ; on peut concevoir d'utiliser même plus de deux adsorbeurs à charbon actif, une capacité pour l'oxydation totale ou partielle de l'oxyde nitrique NO sortant d'un lit en peroxyde d'azote $NO_2$ étant disposée entre chaque adsorbeur.

Le procédé ainsi décrit dans le cas des ateliers d'acide nitrique peut également être utilisé dans tous les cas où l'on doit éliminer du peroxyde d'azote $NO_2$, par exemple dans les installations de fabrication de nitrate de calcium ou de composés organiques nitrés.

Ce procédé peut aussi s'utiliser pour la surtitration d'acide nitrique dilué obtenu dans les ateliers de fabrication d'acide nitrique ; dans ce cas, on emploie la solution nitrique comme liquide d'arrosage.

Ce procédé nouveau permet donc de décolorer parfaitement les gaz de queue issus des ateliers de fabrication d'acide nitrique, tout en réduisant considérablement les rejets de NOx et en augmentant le rendement global des ateliers par récupération d'acide nitrique.

**Revendications**

1. Procédé d'élimination continue des oxydes d'azote d'un mélange gazeux contenant lesdits oxydes d'azote et de l'oxygène, caractérisé en ce qu'il comprend une seule étape consistant à faire passer simultanément ce mélange gazeux et un liquide d'arrosage pouvant être de l'eau pure ou une solution nitrique sur un lit de charbon actif à une température comprise entre environ 2 et 80 °C.

2. Procédé selon la revendication 1, caractérisé en ce que le passage du gaz et du liquide s'effectue à co-courant, à contre-courant ou à courants croisés.

3. Procédé selon la revendication 1 ou 2, caractérisé en ce que le liquide de lavage est recyclé au moins partiellement.

4. Procédé selon l'une quelconque des revendications 1 à 3, caractérisé en ce que l'on opère à une pression comprise entre environ 0,9 et 12 bars absolus.

5. Procédé selon l'une quelconque des revendications 1 à 4, caractérisé en ce que la vitesse spatiale du liquide est comprise entre environ 0,05 et 2 $h^{-1}$.

6. Procédé selon l'une quelconque des revendications 1 à 5, caractérisé en ce que la vitesse spatiale du gaz est comprise entre 100 et 3 500 $h^{-1}$.

7. Procédé selon l'une quelconque des revendications 1 à 6, caractérisé en ce que la teneur en oxydes d'azote du gaz à traiter est comprise entre environ 500 et 5 000 volumes d'oxydes d'azote NOx par million de volumes de gaz à traiter.

8. Procédé selon l'une quelconque des revendications 1 à 7, caractérisé en ce qu'on opère en deux ou plusieurs étapes sur deux ou plusieurs lits de charbon actif placés en série, lesdits lits étant séparés par des capacités où l'oxyde nitrique NO sortant d'un lit est oxydé en tout ou partie en peroxyde d'azote $NO_2$.

9. Procédé selon l'une quelconque des revendications 1 à 8, caractérisé par le fait que le mélange gazeux à traiter est constitué par des gaz de queue d'ateliers de fabrication d'acide nitrique et qu'on augmente le rendement global de l'atelier par récupération d'acide nitrique.

10. Procédé selon la revendication 9, caractérisé par le fait qu'on utilise comme liquide d'arrosage une solution nitrique de façon à surtitrer l'acide nitrique dilué obtenu dans l'atelier de fabrication d'acide nitrique.

11. Installation pour la mise en œuvre du procédé selon la revendication 1, comprenant une colonne (3) comportant à sa partie supérieure une entrée de liquide d'arrosage, ainsi qu'une entrée et une sortie des gaz à épurer respectivement ou à la fois à sa partie supérieure et à sa partie inférieure et un bac de récupération de liquide (20), caractérisée en ce qu'elle comprend un seul lit de charbon actif (4) sur lequel est pulvérisé le liquide d'arrosage, une pompe (9) avec arrivée de liquide d'arrosage et arrivée de liquide à recycler et sortie vers la colonne, un dispositif récupérateur de liquide (14), disposé sur la sortie vers l'air libre des gaz épurés, ainsi que des vannes (6), (8), (27), (25), (26), (24), (18), (9), (21), (22), (2), (13), (23), (15), (16) sur les différents circuits permettant le recyclage du liquide et le passage du gaz et du liquide à co-courant, à contre-courant ou à courants croisés.

**Claims**

1. Process for the continuous removal of nitrogen oxides from a gas mixture containing the said nitrogen oxides and oxygen, characterised in that it comprises a single stage which consists of simultaneously passing this gas mixture and a spraying liquid, which can be pure water or a nitric acid solution, over a bed of active charcoal at a temperature of between about 2 and 80 °C.

2. Process according to claim 1, characterised in that the passage of the gas and of the liquid is carried out in co-current, in counter-current or in cross-current.

3. Process according to claim 1 or 2, characterised in that the wash liquid is recycled at least partially.

4. Process according to any one of claims 1 to 3, characterised in that it is carried out at a pressure of between about 0.9 and 12 bars absolute.

5. Process according to any one of claims 1 to 4, characterised in that the space velocity of the liquid is between about 0.05 and 2 $h^{-1}$.

6. Process according to any one of claims 1 to 5, characterised in that the space velocity of the gas is between 100 and 3 500 $h^{-1}$.

7. Process according to any one of claims 1 to 6, characterised in that the nitrogen oxides content of the gas to be treated is between about 500 and 5 000 volumes of nitrogen oxides $NO_x$ per million volumes of gas to be treated.

8. Process according to any one of claims 1 to 7, characterised in that it is carried out in two or more stages over two or more active charcoal beds arranged in series, the said beds being separated by spaces where the nitric oxide NO leaving a bed is oxidised wholly or partially to nitrogen peroxide $NO_2$.

9. Process according to any one of claims 1 to 8, characterised in that the gas mixture to be treated consists of tail gases from nitric acid manufacturing plants and that the overall yield of the plant is increased by recovering nitric acid.

10. Process according to claim 9, characterised in that the spraying liquid used is a nitric acid solution, so as to increase the strength of the dilute nitric acid obtained in the nitric acid manufacturing plant.

11. Installation for carrying out the process according to claim 1, comprising a column (3) possessing, in its upper part, a spraying liquid inlet, as well as an inlet and an outlet for the gases to be purified, either in its upper part and in its lower part respectively, or in both its upper part and its lower part, and a liquid recovery tank (20), characterised in that it comprises a single bed of active charcoal (4) onto which is atomised the spraying liquid, a pump (9) with an inlet for the spraying liquid and an inlet for the liquid to be recycled, and with an outlet towards the column, a liquid recovery device (14), arranged over the outlet, into the atmosphere, of the purified gases, as well as valves (6), (8), (27), (25), (26), (24), (18), (9), (21), (22), (2), (13), (23), (15) and (16) on the various circuits, allowing the liquid to be recycled and allowing the gas and the liquid to be passed in co-current, in counter-current or in cross-current.

**Patentansprüche**

1. Verfahren zur kontinuierlichen Entfernung von Stickoxiden aus einem Gasgemisch, das diese Stickoxide und Sauerstoff enthält, dadurch gekennzeichnet, daß es eine einzige Stufe umfaßt, die darin besteht, daß man gleichzeitig dieses Gasgemisch und eine Berieselungsflüssigkeit, die reines Wasser oder eine salpetersäure Lösung sein kann, durch ein Bett aus Aktivkohle bei einer Temperatur zwischen etwa 2 und 80 °C hindurchleitet.

2. Verfahren nach Anspruch 1, dadurch gekennzeichnet, daß der Durchtritt des Gases und der Flüssigkeit im Gleichstrom, im Gegenstrom oder in sich kreuzenden Strömen erfolgt.

3. Verfahren nach Anspruch 1 oder 2, dadurch gekennzeichnet, daß die Waschflüssigkeit wenigstens teilweise rückgeführt wird.

4. Verfahren nach einem der Ansprüche 1 bis 3, dadurch gekennzeichnet, daß man bei einem Druck zwischen etwa 0,9 und 12 bar absolut arbeitet.

5. Verfahren nach einem der Ansprüche 1 bis 4, dadurch gekennzeichnet, daß die Raumgeschwindigkeit der Flüssigkeit zwischen etwa 0,05 und 2 $h^{-1}$ liegt.

6. Verfahren nach einem der Ansprüche 1 bis 5, dadurch gekennzeichnet, daß die Raumgeschwindigkeit des Gases zwischen 100 und 3 500 $h^{-1}$ ist.

7. Verfahren nach einem der Ansprüche 1 bis 6, dadurch gekennzeichnet, daß der Gehalt an Stickoxiden im zu behandelden Gas zwischen etwa 500 und 5 000 Volumseinheiten der Stickoxide NOx pro Million Volumseinheiten des zu behandelnden Gases ist.

8. Verfahren nach einem der Ansprüche 1 bis 7, dadurch gekennzeichnet, daß man in zwei oder mehreren Stufen in zwei oder mehreren Betten aus Aktivkohle arbeitet, die in Serie liegen, wobei die Betten durch Räume getrennt sind, wo das Stickstoffoxid NO, das ein Bett verläßt, vollkommen oder teilweise in Stickstoffperoxid $NO_2$ oxidiert wird.

9. Verfahren nach einem der Ansprüche 1 bis 8, dadurch gekennzeichnet, daß das zu behandelnde Gasgemisch aus Endgasen von Betrieben zur Herstellung von Salpetersäure gebildet wird und daß man die Gesamtausbeute des Betriebes durch Wiedergewinnung der Salpetersäure erhöht.

10. Verfahren nach Anspruch 9, dadurch gekennzeichnet, daß man als Berieselungsflüssigkeit eine salpetersäure Lösung verwendet, wobei man die verdünnte, im Betrieb zur Herstellung der Salpetersäure erhaltene Salpetersäure anreichert.

11. Anlage zur Durchführung des Verfahrens nach Anspruch 1 mit einer Säule (3), die in ihrem oberen Teil einen Eintritt für die Berieselungsflüssigkeit sowie einen Eingang bzw. einen Ausgang für das zu reinigende Gas aufweist, oder gleichzeitig in ihrem oberen Teil und in ihrem unteren Teil besitzt, und einen Behälter (20) zur Wiedergewinnung der Flüssigkeit hat, dadurch gekennzeichnet, daß sie ein einziges Bett (4) aus aktivem Kohlenstoff, auf das die Berieselungsflüssigkeit zerstäubt wird, eine Pumpe (9) mit einer Zufuhr für die Berieselungsflüssigkeit und einer Zufuhr für die rückzuführende Flüssigkeit und Abgabe an die Säule, eine Wiedergewinnungseinrichtung (14) für die Flüssigkeit, die am Auftritt zur freien Luft für das gereinigte Gas angeordnet ist, sowie Ventile (6, 8, 27, 25, 26, 24, 18, 9, 21, 22, 2, 13, 23, 15, 16) in den verschiedenen Kreisen aufweist, die die Rückführung der Flüssigkeit und den Durchtritt des Gases und der Flüssigkeit im Gleichstrom, Gegenstrom oder in sich kreuzenden Strömen gestatten.

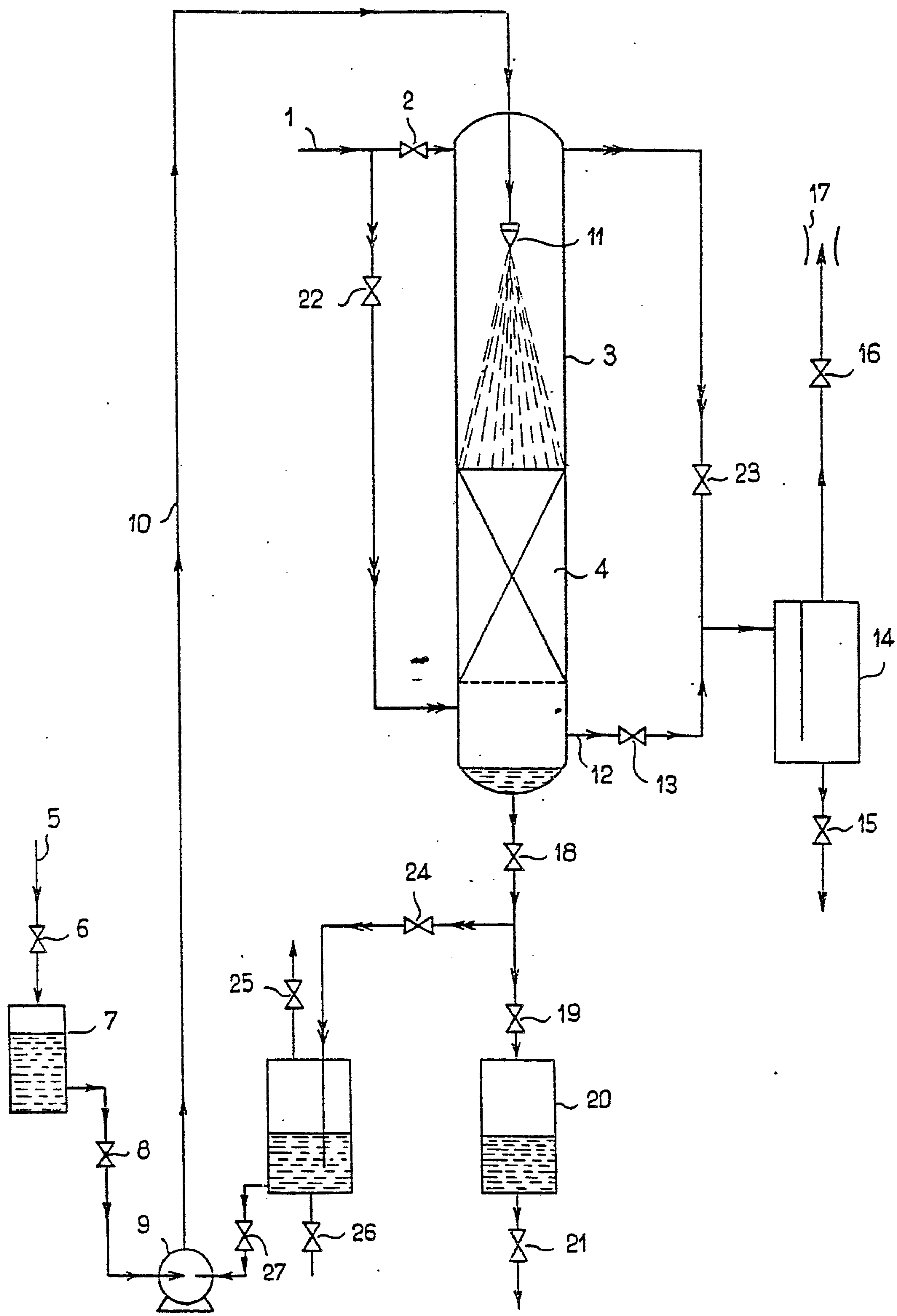
1
2
3
4
5
6
7
8
9
10
11
12
13
14
15
16
17
18
19
20
21
22
23
24
25
26
27